# EUROPEAN PATENT SPECIFICATION

(11) **EP 3 245 015 B1**
(45) Date of publication and mention of the grant of the patent: **09.09.2020**
(21) Application number: 16700855.6
(22) Date of filing: 11.01.2016
(51) Int. Cl.: B09B 3/00, B03B 9/06, B65F 1/00

(54) **HOUSEHOLD APPLIANCE FOR THE TREATMENT OF HOUSEHOLD WASTE**
HAUSHALTSGERÄT ZUR BEHANDLUNG VON HAUSMÜLL
APPAREIL ÉLECTROMÉNAGER POUR LE TRAITEMENT DE DÉCHETS MÉNAGERS

(30) Priority: 12.01.2015 IT MO20150003
(43) Date of publication of application: 22.11.2017
(73) Proprietor: Graf S.p.A., 41015 Nonantola (MO) (IT)
(72) Inventor: VACCARI, Andrea, 41015 Nonantola (MO) (IT)
(74) Representative: Luppi, Emanuele
(86) International application number: PCT/IB2016/050105
(87) International publication number: WO 2016/113662

(56) References cited:
- EP-A2- 0 686 579
- WO-A1-2006/097952
- WO-A1-2013/128351
- GB-A- 2 487 990
- US-A- 5 257 577
- US-B1- 6 903 142

## Description

### Technical Field

The present invention relates to a household appliance for the treatment of household waste.

### Background Art

The management and disposal of waste has always been one of the big problems which administrators, both local and national, have had to face.

European directives on waste aim at maximizing the amount of waste to be reused and/or recycled.

In particular, the "Directive 2008/98/EC", a cornerstone of legislation in Europe, provides that the rules and actions aimed at managing and disposing of waste be oriented according to the following hierarchy:
- prevention;
- preparation for reuse;
- recycling;
- recovery;
- disposal.

This hierarchy is designed both to help save energy and materials through reuse and recovery, and to minimize environmental impacts relating to landfills by reducing the amount of waste taken to landfills.

The national laws of European countries, but also non-European countries, are directed towards measures adapted to concretize the envisaged hierarchy.

In this sense, almost all industrialized countries are promoting what is commonly called "pre-sorted collection", i.e., a system of collection of municipal solid waste (MSW), which provides for the separation of same by commodity class by the general public.

The goal is to obtain waste flows which are as homogeneous as possible based on the type of material so as to facilitate downstream recovery and recycling operations and discourage transport to landfills.

It is well known that for all the pre-sorted collection systems, like in document EP 0 686 579 A2, a series of problems exist, especially in the first stage when it is the private individual who has to actively pre-sort the waste.

Very often, in fact, the flow of waste from such collection is not sufficiently homogeneous for it to be sent for further treatment except in landfills.

The causes are many and most of them can be attributed to bad behaviour of members of the public who, either through negligence or lack of clarity on the part of local governments, often fail to associate the various types of wastes generating non-homogeneous flows which are therefore difficult to recover or reuse.

This problem is more pronounced in the case of "neighbourhood collection systems", wherein householders place their waste in special common bins which are then emptied by collection operators. In this case the negligence or accidental mistakes of a few can affect the success of the waste sorting of many. In the "door-to-door collection system", wherein the waste is collected from door to door, this problem is less acute, since errors and negligence remain confined to the family.

The problem however remains of separating the waste properly in order to maximize the amount of material to be sent for recovery and reuse.

The pre-sorted waste collection system, therefore, has a number of drawbacks. As already mentioned, a first drawback is linked to the fact that pre-sorted waste collection requires the active involvement of the population.

This active involvement is susceptible to errors in placing waste in the special bins because of several factors such as negligence, lack of uniformity in the downstream treatment systems, lack of clarity and information to the public on types of waste, etc.

The result is that, where these factors are predominant, relevant quantities of unwanted material can be obtained in the bins provided for the collection of specific commodity classes, with the risk of having a non-homogeneous flow of material and which can be therefore hard to reuse or recover.

Another drawback related to "door-to-door" collection systems is tied to the time organic wastes remain in the home on the days when this type of waste is not collected.

Organic wastes, in fact, are easily biodegradable and therefore cause bad smells, unpleasant in the home. Document WO 2006/097952 A1 discloses an appliance dedicated and limited to organic waste disposal.

### Description of the Invention

The main aim of the present invention is to provide a household appliance for the treatment of household waste which allows pre-sorting the wastes in flows of homogeneous material by simplifying and reducing the sorting work of individual householders.

One object of the present invention is to provide a household appliance for the treatment of household waste which allows temporary storage of pre-sorted wastes without these releasing bad smells into the domestic environment.

Another object of the present invention is to provide a household appliance for the treatment of household waste which allows to overcome the mentioned drawbacks of the prior art within the framework of a simple, rational, easy, effective to use and low cost solution.

The objects stated above are achieved by the present household appliance for the treatment of household waste having the characteristics of claim 1.

### Brief Description of the Drawings

Other characteristics and advantages of the present invention will become better evident from the description of a preferred but not exclusive embodiment of a household appliance for the treatment of household waste illustrated by way of an indicative, but non-limiting, example in the accompanying drawings in which:
Figure 1 is an axonometric view of a household appliance according to the invention;
Figure 2 is a block diagram illustrating the various components of the household appliance according to the invention;
Figure 3 is a detail view of a first component of the household appliance according to the invention;
Figures 4 and 5 are detail views of the household appliance according to the invention in a first work configuration;
Figures 6, 7 and 8 are detail views of the household appliance according to the invention in a second work configuration.

### Embodiments of the Invention

With particular reference to such figures, reference number 1 globally designates a household appliance for the treatment of household waste.

The household appliance comprises a treatment cab 2 on which is formed one inlet opening 3 adapted to bring a quantity of mixed household waste 4 into the cab 2 itself.

Inside the cab 2 separation means 14, 19, 21, 23, 24, 25, 26 are accommodated adapted to separate the mixed household waste 4 into a wet organic part 5, a dry organic part 5a, a recoverable dry part 6 and a dry mixed part 7.

In this treatise, by "mixed household wastes" is meant any municipal solid waste (MSW) that can be produced in the home.

By "wet organic part" is meant the organic part of mixed household wastes generally characterized by high water content in percentage with respect to weight. Included in this category are wet food wastes, vegetables and any other wet waste product of an organic nature.

By "dry organic part" is meant the organic part of mixed household wastes generally characterized by low water content in percentage with respect to weight. Included in this category are dry waste products of an organic nature such as, e.g., egg shells, fruit stones, bones, etc.

By "dry waste" is meant any household waste not belonging to the "wet organic part" and "dry organic part".

By "recoverable dry part" is meant household wastes belonging to the dry part and intended for subsequent recovery (energy recovery, reuse, recycling). Included in this part are paper, certain types of plastic, glass and certain metals (aluminium, iron, etc.).

By "irrecoverable dry part" are meant all those household wastes which do not fall within the types described above.

On the cab 2 are formed at least a first output 8, a second output 9 and a third output 10 adapted to make the wet organic part 5, the recoverable dry part 6 and the dry mixed part 7 exit, respectively.

The outputs 8, 9, 10 are advantageously made air and watertight, so as to prevent the escape of smells and runoff.

Outputs 8, 9, 10, furthermore, can be associated in a removable way with traditional sacks, bags, baskets or other containers, specifically designed for pre-sorted waste collection and usually provided to householders by the relevant authorities.

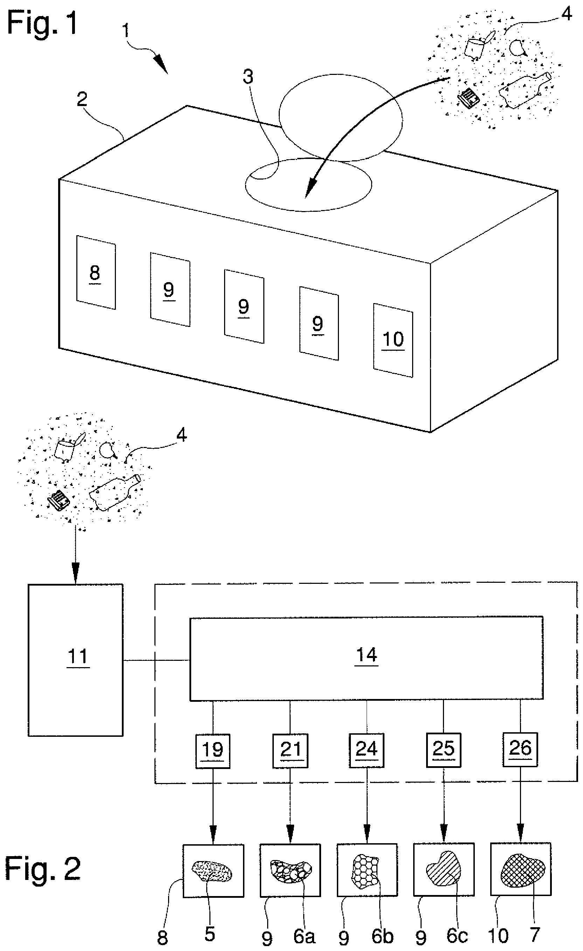

In the embodiment shown in figure 1, the cab 2 has the shape of a parallelepiped with a rectangular base and the inlet opening 3 is obtained on the upper wall of the cab 2.

Alternative solutions cannot be ruled out, wherein the shape of the cab 2 is different and/or the inlet opening 3 is formed on another position, such as e.g. a side wall of the cab 2 itself.

Always with reference to figure 1, on a side wall of the cab 2 are obtained five outputs 8, 9, 10.

The number of outputs 8, 9, 10 depends on the type of operator and on the type of treatments which are downstream of the collection cycle.

In the present embodiment, reference has been made to an operator that collects three types of recoverable dry part 6: a first type 6a which includes glass and metals, a second type 6b which includes paper, and a third type 6c which includes recoverable plastic.

Embodiments cannot be ruled out suited to different operators and different types of treatments downstream of the collection cycle wherein, e.g., the recoverable dry part is entirely taken over by the operator itself (multi-material collection) and sorted downstream in special industrial plants.

Figure 2 schematically shows the path of the mixed household wastes 4, from entrance into the cab 2 up to the outputs 8, 9, 10.

The household appliance 1 comprises a pre-treatment unit 11 accessible from the inlet opening 3 and adapted to receive and pre-treat the mixed household waste 4.

The pre-treatment unit 11 is also adapted to send the pre-treated waste obtained to the separation means 14, 19, 21, 23, 24, 25, 26.

In particular, the pre-treatment unit 11 comprises at least a pushing element 12 adapted to push the mixed household waste 4 through a cutting device 13.

The latter is positioned between the pre-treatment unit 11 and the separation means 14, 19, 21, 23, 24, 25, 26 and has at least one passage opening for the transfer of the pre-treated waste 4a to the separation means 14, 19, 21, 23, 24, 25, 26.

In the present embodiment, the pre-treatment unit 11 is made up of a chamber identified inside the cab 2, but embodiments cannot be ruled out wherein the pre-treatment unit 11 is located outside the cab 2.

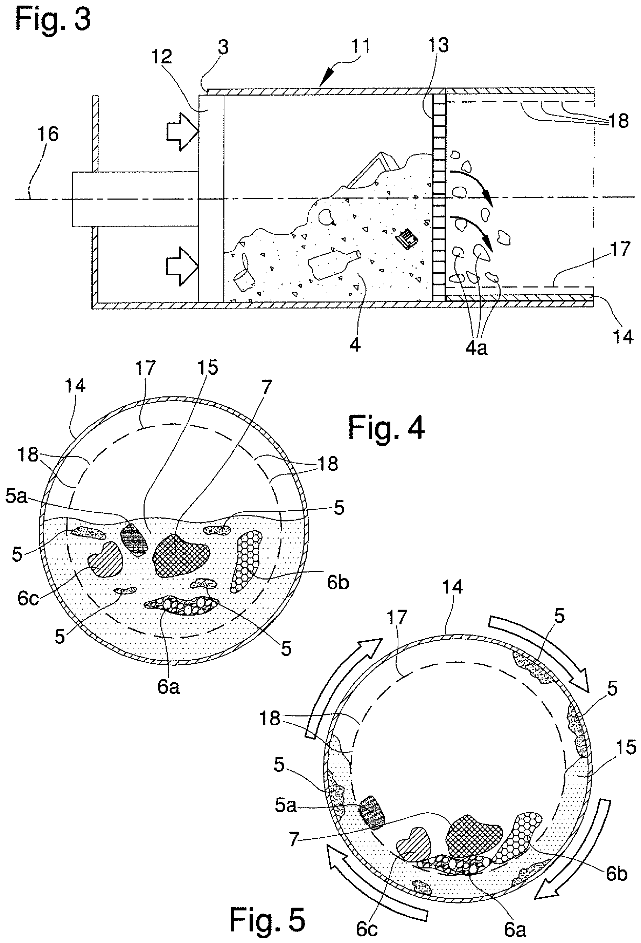

The chamber, as shown in figure 3, is accessible through the inlet opening 3, through which are inserted the mixed household wastes 4, and communicates with the rest of the cab 2 wherein are arranged the separation means 14, 19, 21, 23, 24, 25, 26 through the cutting device 13.

With reference to figure 3, the pushing element 12 is made up of a piston element which, moving along a substantially horizontal direction, pushes the mixed household wastes 4 towards the cutting device 13.

The cutting device 13 is made up, e.g., of a high-strength grid the meshes of which are identified by cutting blades arranged horizontally and vertically.

The mixed household wastes 4, passing through the grid, undergo a dimensional reduction adapted to facilitate the downstream treatments.

Alternative solutions cannot be ruled out wherein in place of the piston element there are other elements or devices such as particular positive displacement pumps or screw feeders or other alternative elements adapted to push the mixed household wastes 4 towards the cutting device 13.

Similarly, solutions cannot be ruled out which, in place of the sharp grid, provide for alternative devices, such as, e.g., a single- or double-shaft shredder, or a series of rotating blades or crushing elements or other devices adapted to pre-treat incoming wastes before sending them to the separation means 14, 19, 21,23,24,25,26.

The separation means 14, 19, 21, 23, 24, 25, 26 comprise a container device 14 arranged downstream of the pre-treatment unit 11 and adapted to receive the pre-treated wastes 4a and to mix them with a first work fluid 15.

In particular, part of the first work fluid 15 is adapted to be absorbed by the wet organic part 5 present in the pre-treated waste 4a and then partially disintegrating it so as to create a wet slurry.

The first work fluid 15 is advantageously water even though the use of other liquids cannot be ruled out adapted to mix with the wet organic part 5.

As shown in the illustrations, the container device 14 is substantially cylindrical and has a main axis 16.

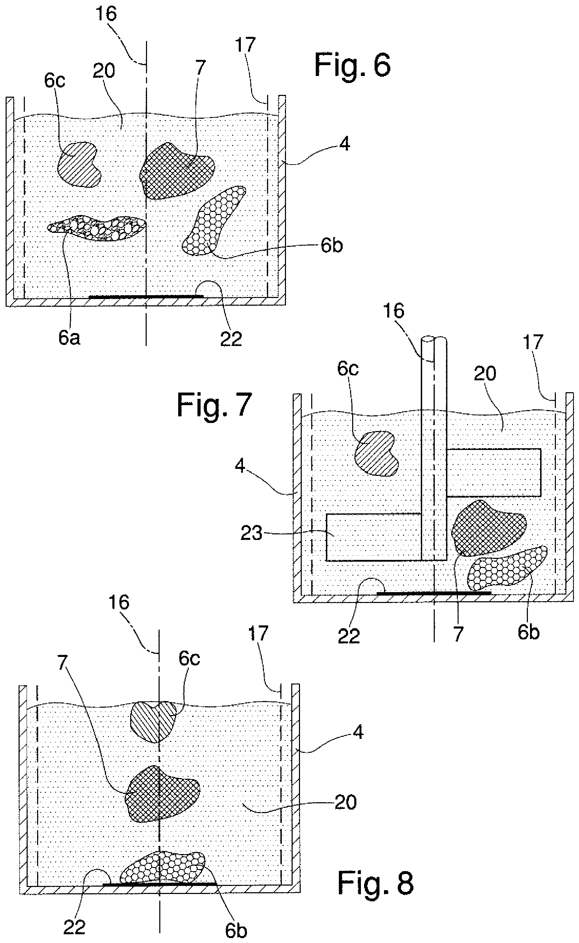

In particular, the container device 14 is movable between a first work configuration (Figures 3, 4 and 5), wherein the main axis 16 is substantially horizontal, and a second work configuration (Figures 6, 7 and 8), wherein the main axis 16 is substantially vertical.

Internally to the container device 14 are installed filtering means adapted to separate the wet organic part 5 from the pre-treated wastes 4a coming from the pre-treatment unit 11.

In particular, the filtering means comprise at least one drum 17 in which the pre-treated wastes 4a enter.

The drum 17 is rotatable around an axis coincident with the main axis 16 so as to impress to the material present inside a centrifugal force adapted to push the material itself towards the walls of the drum 17.

In the present embodiment, the drum 17 has a substantially cylindrical shape and is coaxial with respect to the container device 14.

On the walls of the drum 17 through holes 18 have been made.

The latter are sized and spaced apart from one another in such a way as to allow the transit of the wet organic part 5 through the walls of the drum 17 when this is pushed by the centrifugal force against the walls themselves.

This way, at the end of rotation of the drum 17, the wet organic part 5 is separated from the rest of the material and occupies the space interposed between the drum 17 and the walls of the container device 14.

The separation means 14, 19, 21, 23, 24, 25, 26 comprise at least a first press-like element 19 adapted to compact the wet organic part 5 and to send it towards the first output 8.

The first press-like element 19 can be activated so as to press the wet organic part 5 which has come out of the drum 17 after rotation.

This way, the wet organic part 5 is sent to the relative first output 8 and the remaining water is moved away through a discharge port formed in the container device 14.

Outside the drum 17 a buffer element or a blade is also present, not shown in the illustrations and positioned so as to scrape the outer surface of the drum 17 cleaning it of any deposits of wet organic part 5.

The separation means 14, 19, 21, 23, 24, 25, 26 comprise a first substance insertable within the container device 14.

This first substance is adapted to dissolve the dry organic part 5a and at least part of the recoverable dry part 6 to form, as a product of this reaction, an acid solution.

The separation means 14, 19, 21, 23, 24, 25, 26 moreover comprise a second substance also insertable in the container device 14.

This second substance is adapted to react with the acid solution to form a substantially neutral solution which can be moved away from the container device and discharged in the sewerage system.

In the present embodiment, the first substance and the second substance are selected so that they are an acid and a base respectively.

The first substance is, e.g., hydrochloric acid, and the second substance is, e.g., bicarbonate or caustic soda.

The hydrochloric acid is automatically inserted in the container device 14 and, because of its chemical properties, it is adapted to dissolve the dry organic part 5a and part of the recoverable dry part 6, e.g., paper and cardboard.

The resulting product of the chemical reactions that lead to the dissolution of the material mentioned above is an acid aqueous solution.

The acidity of the latter is counteracted by inserting the second substance (caustic soda).

The latter reacts with the acid aqueous solution by raising its pH up to values such as to obtain a substantially neutral solution (pH approximately equal to 7). The neutral solution thus obtained, consisting essentially of water and salts precipitated as a result of reactions between the various substances, can be drained off directly into the sewer through a special discharge channel connected to the household appliance 1.

The pH control and, therefore, the dosage of the various substances takes place by means of a suitable sensor, a pH meter placed in the household appliance 1 and, for simplicity, not shown in the illustrations.

With reference to Figures 6, 7 and 8, the container device 14 in the second work configuration can be filled with a second work fluid 20 having a predetermined specific weight.

The second work fluid 20 is adapted to separate by gravity the first type 6a of the recoverable dry part 6 that has not been dissolved in hydrochloric acid.

In particular, the second work fluid 20 can be water, oil or any mixture characterized by a specific weight such as to facilitate the gravimetric separation of the materials present and, in more detail, the separation of the first type 6a. Alternative embodiments cannot be ruled out wherein the work fluid 20 consists of compressed air introduced into the container device 14 so as to strike the material present.

In so doing, a separation is made between the various types of wastes, depending on the hydrodynamic action applied to the individual particles of materials.

The lighter materials are dragged, pushed by the hydrodynamic action of the air, in the direction of the air flow itself; the heavier materials, where the acting weight force is greater than the hydrodynamic action, fall downwards and are separated from the lighter materials.

The solution cannot be ruled out furthermore wherein the work fluid 20 is chosen in such a way as to exploit the different viscosity of the wastes present to separate them according to the types listed above.

In the example in figure 6, the second work fluid 20 has a specific weight such as to make the glass and the metals precipitate to the bottom unlike the other materials.

This way, it is possible to extract the first type 6a through a first conveyor element 21 which is adapted to convey the first type 6a into a respective second output 9.

The first conveyor element 21 can be a bottom scraper or a blade or any other element adapted to collect the first type 6a deposited on the bottom of the container device 14 before conveying it to a dedicated passage 22.

The latter, obtained in the proximity of the bottom of the container device 14, is advantageously made air and watertight, and opens automatically, e.g., after a time interval calculated according to the time employed by the materials of the first type 6a to deposit themselves on the bottom.

Alternative solutions cannot be ruled out wherein the first conveyor element 21 is of another type and/or the passage towards the second output 9 is different from that previously described.

As shown in Figure 7, the separation means 14, 19, 21, 23, 24, 25, 26 comprise a mixing element 23 insertable into the container device 14.

In particular, the mixing element 23 can be operated when the drum 17 is in the second work configuration and is adapted to separate a second type 6b and a third type 6c of the recoverable dry part 6 from the dry mixed part 7.

In the present embodiment, the mixing element 23 is a rotary shaft on which two or more propellers are keyed.

The rotation of the shaft agitates the second work fluid 20 generating turbulence in the container device 14 adapted to facilitate the separation of the materials. In particular, the rotating and dragging action of the propellers determines the detachment of the composite materials such as, e.g., paper and plastic containers or the like.

Alternative embodiments cannot be ruled out wherein there is a plurality of mixing elements 23, or wherein the mixing elements 23 are composed of other components, such as, e.g., propellers or impellers positioned inside the container device 14.

This way the second type 6b can be separated from the recoverable dry part 6. In the present embodiment, the second type 6b is mainly composed of a slurry of paper and cellulose which deposits on the bottom.

Similarly to what described above, the separation means 14, 19, 21, 23, 24, 25, 26 comprise at least a second conveyor element 24 adapted to convey the second type 6b of the recoverable dry part 6 to a respective second output 9. The second conveyor element 24 is composed, e.g., of a second press-like element which compacts and conveys the slurry of paper and cellulose deposited on the bottom to the respective second output 9.

Different embodiments cannot be ruled out wherein the second conveyor element 24 is made with alternative solutions such as, e.g., scrapers or brushes adapted to collect up the slurry of paper and cellulose.

As regards the third type, this is mainly composed of plastic and is intended to float in the container device 14.

The separation means 14, 19, 21, 23, 24, 25, 26 comprise at least a third conveyor element 25 adapted to convey the third type 6c of the recoverable dry part 6 to a respective second output 9.

In this case, the third conveyor element 25 is composed of movable components adapted to recover the floating plastic material and convey it to the respective second output 9.

The separation means 14, 19, 21, 23, 24, 25, 26 finally comprise at least a fourth conveyor element 26 adapted to convey the dry mixed part 7 to the third output 10.

In particular, the dry mixed part 7 is composed of the not previously separated residual material (textile, composite materials difficult to separate, etc.) and is sent for disposal in landfills.

The household appliance 1 is automated and the various components are controlled by electronic devices.

Command control is by means of one or more digital displays which, in addition to allowing the start and stop of the working cycle by means of special commands, permit displaying information and data on cycle progress.

The operation of the present invention is as follows.

In a first phase (figure 3), the mixed household wastes 4, inserted through the inlet opening 3, are pre-treated by the action of the cutting device 13.

The pushing element 12 pushes the waste through the meshes of the grid causing the partial compaction and shredding of same.

The pre-treated waste 4a therefore, still pushed by the pushing element 12, come into the drum 17 arranged downstream of the grid.

In a second phase (figure 4), the drum 17, in a horizontal position and containing pre-treated waste 4a, is partially filled with the first work fluid 15 and is made to rotate around its own axis.

This way the action of the centrifugal force allows the separation of the wet organic part 5.

The latter, in fact, thanks to the first work fluid 15 is separated from the rest of the pre-treated waste 4a forming a wet slurry which, pushed by the centrifugal force, moves beyond the through holes 18 of the drum (figure 4).

After a time sufficient to make such separation possible, the drum 17 is stopped and the first work fluid moved away from the container device 14. Subsequently, the wet organic part 5 deposited between the drum 17 itself and the walls of the container device 14 is filtered and compacted using the first press-like element 19.

The latter compacts the wet organic part 5 and pushes it towards the corresponding first output 8.

Subsequently hydrochloric acid is inserted which attacks and dissolves the dry organic part 5a and also partly the dry part 6, especially paper, cardboard and the like.

The acid solution which forms is contrasted by the insertion of caustic soda so as to obtain a substantially neutral solution consisting mainly of water and salts. The neutral solution is moved away from the container device 14 to be discharged in the sewerage system.

In a third phase (Figure 6), the drum 17 is brought into vertical position and the container device 14 is filled with the second work fluid 20.

This way, a first type 6a of recoverable dry part 6 is separated by gravity, exploiting the difference in specific weight of the immersed material.

The first type 6a is subsequently collected and sent to the respective second output 9 by means of the opening of the passage 22.

In a fourth step (Figure 7), the mixing element 23 is inserted and activated inside of the container device 14.

The rotary and dragging action of the propellers determines the detachment of the paper fibres from the plastic and thus allows the separation of the second type 6b (paper) and third type 6c (plastic).

The second type 6b, so detached, mixes with the second work fluid 20 creating a slurry of paper and cellulose.

The slurry is compacted and filtered by the second press-like element, in this case coinciding with the second conveyor element 24, and then sent to the respective second output 9.

The third type 6c, floating on the free surface of the second work fluid 20, is collected and sent to the respective second output 9 by means of the third conveyor element 25.

In a last phase, the residual material, i.e. the dry mixed part 7, is extracted and sent to the third output 10 by means of the fourth conveyor element 26.

It has in practice been ascertained how the described invention achieves the proposed objects and in particular the fact is underlined that the household appliance for the treatment of household waste allows, through the various phases described previously, separating the wastes into flows of homogeneous material simplifying and reducing the sorting work of householders.

The invention, furthermore, enables the temporary storage of the pre-sorted waste, avoiding any clutter of smelly bags and/or containers in the home.

## Claims

1. Household appliance (1) for the treatment of household waste, **characterized by** the fact that it comprises:
- a treatment cab (2);
- an inlet opening (3) formed in said cab (2) and adapted to bring a quantity of mixed household waste (4) into said cab (2);
- separation means (14, 19, 21, 23, 24, 25, 26) accommodated in said cab (2) and adapted to separate said mixed household waste (4) into a wet organic part (5), a dry organic part (5a), a recoverable dry part (6) and a dry mixed part (7);
- at least a first output (8), a second output (9) and a third output (10) formed in said cab (2) and adapted to let out said wet organic part (5), said recoverable dry part (6) and said dry mixed part (7), respectively.

2. Household appliance (1) according to claim 1, **characterized by** the fact that it comprises at least a pre-treatment unit (11) associated with said inlet opening (3) and adapted to receive and pre-treat said mixed household waste (4) and to send pre-treated waste (4a) to said separation means (14, 19, 21, 23, 24, 25, 26).

3. Household appliance (1) according to claim 2, **characterized by** the fact that said pre-treatment unit (11) comprises at least a pushing element (12) adapted to push said mixed household waste (4) through a cutting device (13) positioned between said pre-treatment unit (11) and said separation means (14, 19, 21, 23, 24, 25, 26) and having at least a passage opening for the transfer of said pre-treated waste (4a) to said separation means (14, 19, 21, 23, 24, 25, 26).

4. Household appliance (1) according to one or more of the preceding claims, **characterized by** the fact that said separation means (14, 19, 21, 23, 24, 25, 26) comprise a container device (14) arranged downstream of said pre-treatment unit (11) and adapted to receive said pre-treated waste (4a) and to mix them with a first work fluid (15).

5. Household appliance (1) according to one or more of the preceding claims, **characterized by** the fact that said container device (14) is substantially cylindrical and has a main axis (16).

6. Household appliance (1) according to one or more of the preceding claims, **characterized by** the fact that said container device (14) is movable between a first work configuration, wherein said main axis (16) is substantially horizontal, and a second work configuration wherein said main axis (16) is substantially vertical.

7. Household appliance (1) according to one or more of the preceding claims, **characterized by** the fact that it comprises filtering means internally associated with said container device (14) and adapted to separate said wet organic part (5) from said pre-treated waste (4a).

8. Household appliance (1) according to one or more of the preceding claims, **characterized by** the fact that said filtering means comprise at least a drum (17) rotatable around an axis coincident with said main axis (16) and having through holes (18).

9. Household appliance (1) according to one or more of the preceding claims, **characterized by** the fact that said separation means (14, 19, 21, 23, 24, 25, 26) comprise at least a first press-like element (19) adapted to compact and send said wet organic part (5) to said first output (8).

10. Household appliance (1) according to one or more of the preceding claims, **characterized by** the fact that said separation means (14, 19, 21, 23, 24, 25, 26) comprise a first substance insertable within said container device (14) and adapted to dissolve said dry organic part (5a) and at least partly said recoverable dry part (6) to form an acid solution.

11. Household appliance (1) according to one or more of the preceding claims, **characterized by** the fact that said separation means (14, 19, 21, 23, 24, 25, 26) comprise a second substance insertable within said container device (14) and adapted to react with said acid solution to form a substantially neutral solution which can be discharged from said container device (14).

12. Household appliance (1) according to one or more of the preceding claims, **characterized by** the fact that said container device (14) in said second work configuration can be filled with a second work fluid (20) having a predetermined specific weight adapted to separate by gravity a first type (6a) of said recoverable dry part (6), said separation means (14, 19, 21, 23, 24, 25, 26) comprising at least a first conveyor element (21) adapted to convey said first type (6a) into a respective second output (9).

13. Household appliance (1) according to one or more of the preceding claims, **characterized by** the fact that said separation means (14, 19, 21, 23, 24, 25, 26) comprise a mixing element (23) insertable into said container device (14) and adapted to separate a second type (6b) of said recoverable dry part (6) and a third type (6c) of said recoverable dry part (6) from said dry mixed part (7).

14. Household appliance (1) according to one or more of the preceding claims, **characterized by** the fact that said separation means (14, 19, 21, 23, 24, 25, 26) comprise at least a second conveyor element (24) adapted to convey said second type (6b) of said recoverable dry part (6) to a respective second output (9).

15. Household appliance (1) according to one or more of the preceding claims, **characterized by** the fact that said separation means (14, 19, 21, 23, 24, 25, 26) comprise at least a third conveyor element (25) adapted to convey said third type (6c) of said recoverable dry part (6) to a respective second output (9).

16. Household appliance (1) according to one or more of the preceding claims, **characterized by** the fact that said separation means (14, 19, 21, 23, 24, 25, 26) comprise at least a fourth conveyor element (26) adapted to convey said dry mixed part (7) to said third output (10).

## Patentansprüche

1. Haushaltgerät (1) für die Behandlung von Haushaltsabfall, **dadurch gekennzeichnet, dass** es umfasst:
- eine Behandlungskabine (2);
- eine Einlassöffnung (3), die in der Kabine (2) ausgebildet ist und geeignet ist, eine Menge von gemischtem Haushaltsabfall (4) in die Kabine (2) zu bringen;
- Trennmittel (14, 19, 21, 23, 24, 25, 26), die in der Kabine (2) untergebracht sind und geeignet sind, den gemischten Haushaltsabfall (4) in einen nassen organischen Teil (5), einen trockenen organischen Teil (5a), einen rückgewinnbaren trockenen Teil (6) und einen trockenen gemischten Teil (7) zu trennen;
- mindestens einen ersten Ausgang (8), einen zweiten Ausgang (9) und einen dritten Ausgang (10), die in der Kabine (2) ausgebildet sind und geeignet sind, den nassen organischen Teil (5), den rückgewinnbaren trockenen Teil (6) beziehungsweise den trockenen gemischten Teil (7) herauszulassen.

2. Haushaltsgerät (1) nach Anspruch 1, **dadurch gekennzeichnet, dass** es mindestens eine Vorbehandlungseinheit (11) umfasst, die mit der Einlassöffnung (3) verbunden ist und geeignet ist, den gemischten Haushaltsabfall (4) aufzunehmen und vorzubehandeln und vorbehandelten Abfall (4a) zu den Trennmitteln (14, 19, 21, 23, 24, 25, 26) zu schicken.

3. Haushaltsgerät (1) nach Anspruch 2, **dadurch gekennzeichnet, dass** die Vorbehandlungseinheit (11) mindestens ein Schiebeelement (12) umfasst, das geeignet ist, den gemischten Haushaltsabfall (4) durch eine Schneidvorrichtung (13) zu schieben, die zwischen der Vorbehandlungseinheit (11) und den Trennmitteln (14, 19, 21, 23, 24, 25, 26) angeordnet ist und mindestens eine Durchgangsöffnung für den Transfer des vorbehandelten Abfalls (4a) zu den Trennmitteln (14, 19, 21, 23, 24, 25, 26) aufweist.

4. Haushaltsgerät (1) gemäß einem oder mehreren der vorstehenden Ansprüche, **dadurch gekennzeichnet, dass** die Trennmittel (14, 19, 21, 23, 24, 25, 26) eine Behältervorrichtung (14) umfassen, die stromabwärts der Vorbehandlungseinheit (11) angeordnet ist und geeignet ist, den vorbehandelten Abfall (4a) aufzunehmen und ihn mit einem ersten Arbeitsfluid (15) zu mischen.

5. Haushaltsgerät (1) gemäß einem oder mehreren der vorstehenden Ansprüche, **dadurch gekennzeichnet, dass** die Behältervorrichtung (14) im Wesentlichen zylindrisch ist und eine Hauptachse (16) aufweist.

6. Haushaltsgerät (1) gemäß einem oder mehreren der vorstehenden Ansprüche, **dadurch gekennzeichnet, dass** die Behältervorrichtung (14) bewegbar ist zwischen einer ersten Arbeitskonfiguration, in der die Hauptachse (16) im Wesentlichen horizontal ist, und einer zweiten Arbeitskonfiguration, in der die Hauptachse (16) im Wesentlichen vertikal ist.

7. Haushaltsgerät (1) gemäß einem oder mehreren der vorstehenden Ansprüche, **dadurch gekennzeichnet, dass** es Filtermittel umfasst, die intern mit der Behältervorrichtung (14) verbunden sind und geeignet sind, den nassen organischen Teil (5) von dem vorbehandelten Abfall (4a) zu trennen.

8. Haushaltsgerät (1) nach einem oder mehreren der vorstehenden Ansprüche, **dadurch gekennzeichnet, dass** die Filtermittel mindestens eine Trommel (17) umfassen, die um eine mit der Hauptachse (16) zusammenfallende Achse drehbar ist und Durchgangslöcher (18) aufweist.

9. Haushaltsgerät (1) gemäß einem oder mehreren der vorhergehenden Ansprüche, **dadurch gekennzeichnet, dass** die Trennmittel (14, 19, 21, 23, 24, 25, 26) mindestens ein erstes pressförmiges Element (19) umfassen, das geeignet ist, den nassen organischen Teil (5) zu verdichten und an den ersten Ausgang (8) zu senden.

10. Haushaltsgerät (1) nach einem oder mehreren der vorstehenden Ansprüche, **dadurch gekennzeichnet, dass** die Trennmittel (14, 19, 21, 23, 24, 25, 26) eine erste Substanz umfassen, die in die Behältervorrichtung (14) einführbar ist und geeignet ist, den trockenen organischen Teil (5a) und zumindest teilweise den rückgewinnbaren trockenen Teil (6) aufzulösen, um eine saure Lösung zu bilden.

11. Haushaltsgerät (1) nach einem oder mehreren der vorstehenden Ansprüche, **dadurch gekennzeichnet, dass** die Trennmittel (14, 19, 21, 23, 24, 25, 26) eine zweite Substanz umfassen, die in die Behältervorrichtung (14) einführbar ist und geeignet ist, mit der sauren Lösung zu reagieren, um eine im wesentlichen neutrale Lösung zu bilden, die aus der Behältervorrichtung (14) abgegeben werden kann.

12. Haushaltsgerät (1) nach einem oder mehreren der vorhergehenden Ansprüche, **dadurch gekennzeichnet, dass** die Behältervorrichtung (14) in der zweiten Arbeitskonfiguration mit einem zweiten Arbeitsfluid (20) gefüllt werden kann, das ein vorbestimmtes spezifisches Gewicht hat, das geeignet ist, einen ersten Typ (6a) des rückgewinnbaren trockenen Teils (6) durch die Schwerkraft zu trennen, wobei die Trennmittel (14, 19, 21, 23, 24, 25, 26) mindestens ein erstes Förderelement (21) umfassen, das geeignet ist, den ersten Typ (6a) in einen entsprechenden zweiten Ausgang (9) zu fördern.

13. Haushaltsgerät (1) nach einem oder mehreren der vorhergehenden Ansprüche, **dadurch gekennzeichnet, dass** die Trennmittel (14, 19, 21, 23, 24, 25, 26) ein Mischelement (23) umfassen, das in die Behältervorrichtung (14) einführbar ist und geeignet ist, einen zweiten Typ (6b) des rückgewinnbaren trockenen Teils (6) und einen dritten Typ (6c) des rückgewinnbaren trockenen Teils (6) von dem trockenen gemischten Teil (7) zu trennen.

14. Haushaltsgerät (1) gemäß einem oder mehreren der vorhergehenden Ansprüche, **dadurch gekennzeichnet, dass** die Trennmittel (14, 19, 21, 23, 24, 25, 26) mindestens ein zweites Förderelement (24) umfassen, das geeignet ist, den zweiten Typ (6b) des rückgewinnbaren trockenen Teils (6) zu einem entsprechenden zweiten Ausgang (9) zu fördern.

15. Haushaltsgerät (1) gemäß einem oder mehreren der vorhergehenden Ansprüche, **dadurch gekennzeichnet, dass** die Trennmittel (14, 19, 21, 23, 24, 25, 26) mindestens ein drittes Förderelement (25) umfassen, das geeignet ist, den dritten Typ (6c) des rückgewinnbaren trockenen Teils (6) zu einem entsprechenden zweiten Ausgang (9) zu fördern.

16. Haushaltsgerät (1) gemäß einem oder mehreren der vorstehenden Ansprüche, **dadurch gekennzeichnet, dass** die Trennmittel (14, 19, 21, 23, 24, 25, 26) mindestens ein viertes Förderelement (26) umfassen, das geeignet ist, den trocken gemischten Teil (7) zu dem dritten Ausgang (10) zu fördern.

## Revendications

1. Appareil ménager (1) pour le traitement de déchets ménagers, **caractérisé par le fait qu'**il comprend :
- une cabine de traitement (2) ;
- une ouverture d'entrée (3) formée dans ladite cabine (2) et adaptée pour amener une quantité de déchets ménagers mélangés (4) dans ladite cabine (2) ;
- des moyens de séparation (14, 19, 21, 23, 24, 25, 26) situés dans ladite cabine (2) et adaptés pour séparer lesdits déchets ménagers mélangés (4) en une partie organique humide (5), une partie organique sèche (5a), une partie sèche récupérable (6) et une partie mélangée sèche (7) ;
- au moins une première sortie (8), une deuxième sortie (9) et une troisième sortie (10) formées dans ladite cabine (2) et adaptées pour laisser sortir ladite partie organique humide (5), ladite partie sèche récupérable (6) et ladite partie mélangée sèche (7), respectivement.

2. Appareil ménager (1) selon la revendication 1, **caractérisé par le fait qu'**il comprend au moins une unité de prétraitement (11) associée à ladite ouverture d'entrée (3) et adaptée pour recevoir et prétraiter lesdits déchets ménagers mélangés (4) et pour envoyer des déchets prétraités (4a) auxdits moyens de séparation (14, 19, 21, 23, 24, 25, 26).

3. Appareil ménager (1) selon la revendication 2, **caractérisé par le fait que** ladite unité de prétraitement (11) comprend au moins un élément de poussée (12) adapté pour pousser lesdits déchets ménagers mélangés (4) à travers un dispositif de coupe (13) positionné entre ladite unité de prétraitement (11) et lesdits moyens de séparation (14, 19, 21, 23, 24, 25, 26) et ayant au moins une ouverture de passage pour le transfert desdits déchets prétraités (4a) auxdits moyens de séparation (14, 19, 21, 23, 24, 25, 26).

4. Appareil ménager (1) selon une ou plusieurs des revendications précédentes, **caractérisé par le fait que** lesdits moyens de séparation (14, 19, 21, 23, 24, 25, 26) comprennent un dispositif récipient (14) agencé en aval de ladite unité de prétraitement (11) et adapté pour recevoir lesdits déchets prétraités (4a) et pour les mélanger avec un premier fluide de travail (15).

5. Appareil ménager (1) selon une ou plusieurs des revendications précédentes, **caractérisé par le fait que** ledit dispositif récipient (14) est sensiblement cylindrique et a un axe principal (16).

6. Appareil ménager (1) selon une ou plusieurs des revendications précédentes, **caractérisé par le fait que** ledit dispositif récipient (14) est mobile entre une première configuration de travail, dans laquelle ledit axe principal (16) est sensiblement horizontal, et une seconde configuration de travail dans laquelle ledit axe principal (16) est sensiblement vertical.

7. Appareil ménager (1) selon une ou plusieurs des revendications précédentes, **caractérisé par le fait qu'**il comprend des moyens de filtration associés de manière interne audit dispositif récipient (14) et adaptés pour séparer ladite partie organique humide (5) desdits déchets prétraités (4a).

8. Appareil ménager (1) selon une ou plusieurs des revendications précédentes, **caractérisé par le fait que** lesdits moyens de filtration comprennent au moins un tambour (17) pouvant tourner autour d'un axe coïncidant avec ledit axe principal (16) et ayant des trous débouchants (18).

9. Appareil ménager (1) selon une ou plusieurs des revendications précédentes, **caractérisé par le fait que** lesdits moyens de séparation (14, 19, 21, 23, 24, 25, 26) comprennent au moins un premier élément semblable à une presse (19) adapté pour comprimer et envoyer ladite partie organique humide (5) vers ladite première sortie (8).

10. Appareil ménager (1) selon une ou plusieurs des revendications précédentes, **caractérisé par le fait que** lesdits moyens de séparation (14, 19, 21, 23, 24, 25, 26) comprennent une première substance pouvant être insérée dans ledit dispositif récipient (14) et adaptée pour dissoudre ladite partie organique sèche (5a) et au moins partiellement ladite partie sèche récupérable (6) pour former une solution acide.

11. Appareil ménager (1) selon une ou plusieurs des revendications précédentes, **caractérisé par le fait que** lesdits moyens de séparation (14, 19, 21, 23, 24, 25, 26) comprennent une seconde substance pouvant être insérée dans ledit dispositif récipient (14) et adaptée pour réagir avec ladite solution acide pour former une solution sensiblement neutre qui peut être évacuée dudit dispositif récipient (14).

12. Appareil ménager (1) selon une ou plusieurs des revendications précédentes, **caractérisé par le fait que** ledit dispositif récipient (14) dans ladite seconde configuration de travail peut être rempli d'un second fluide de travail (20) ayant un poids spécifique prédéterminé adapté pour séparer par gravité un premier type (6a) de ladite partie sèche récupérable (6), lesdits moyens de séparation (14, 19, 21, 23, 24, 25, 26) comprenant au moins un premier élément transporteur (21) adapté pour transporter ledit premier type (6a) dans une deuxième sortie (9) respective.

13. Appareil ménager (1) selon une ou plusieurs des revendications précédentes, **caractérisé par le fait que** lesdits moyens de séparation (14, 19, 21, 23, 24, 25, 26) comprennent un élément de mélange (23) pouvant être inséré dans ledit dispositif récipient (14) et adapté pour séparer un deuxième type (6b) de ladite partie sèche récupérable (6) et un troisième type (6c) de ladite partie sèche récupérable (6) de ladite partie mélangée sèche (7).

14. Appareil ménager (1) selon une ou plusieurs des revendications précédentes, **caractérisé par le fait que** lesdits moyens de séparation (14, 19, 21, 23, 24, 25, 26) comprennent au moins un deuxième élément transporteur (24) adapté pour transporter ledit deuxième type (6b) de ladite partie sèche récupérable (6) vers une deuxième sortie (9) respective.

15. Appareil ménager (1) selon une ou plusieurs des revendications précédentes, **caractérisé par le fait que** lesdits moyens de séparation (14, 19, 21, 23, 24, 25, 26) comprennent au moins un troisième élément transporteur (25) adapté pour transporter ledit troisième type (6c) de ladite partie sèche récupérable (6) vers une deuxième sortie (9) respective.

16. Appareil ménager (1) selon une ou plusieurs des revendications précédentes, **caractérisé par le fait que** lesdits moyens de séparation (14, 19, 21, 23, 24, 25, 26) comprennent au moins un quatrième élément transporteur (26) adapté pour transporter ladite partie mélangée sèche (7) vers ladite troisième sortie (10).
